# EUROPEAN PATENT SPECIFICATION

(11) **EP 3 272 555 B1**
(45) Date of publication and mention of the grant of the patent: **10.07.2019**
(21) Application number: 16764672.8
(22) Date of filing: 26.02.2016
(51) Int. Cl.: B60C 11/03, B60C 11/13

(54) **TIRE**
REIFEN
PNEU

(30) Priority: 18.03.2015 JP 2015054700
(43) Date of publication of application: 24.01.2018
(73) Proprietor: Bridgestone Corporation, Tokyo 104-8340 (JP)
(72) Inventor: YAMAGUCHI, Masashi, Tokyo 104-8340 (JP)
(74) Representative: Oxley, Robin John George
(86) International application number: PCT/JP2016/055956
(87) International publication number: WO 2016/147842

(56) References cited:
- EP-A1- 0 485 883
- EP-A1- 0 561 531
- WO-A1-2011/145721
- WO-A1-2014/099491
- WO-A1-2014/142349
- WO-A1-2016/009912
- CN-A- 102 887 039
- JP-A- 2000 108 615
- JP-A- 2005 067 267
- JP-A- 2007 106 314
- JP-A- 2010 000 883
- JP-A- 2013 233 834
- JP-A- 2015 040 023
- US-A1- 2012 291 934

## Description

### BACKGROUND OF THE INVENTION

### Field of the Invention

The present invention relates to a tire provided with a plurality of blocks on a tread portion.

### Related Background of the Invention

Conventionally, a block pattern having a plurality of blocks is formed on a tread portion of various tires such as a tire for heavy load. During running of a vehicle to which such tires are attached, strain is generated in the tread portion due to deformation of a member in the tread portion of the tire. In addition, the tread portion generates heat due to viscoelasticity of rubber, and thus a temperature of the tread portion rises. Strain and temperature of the tread portion are main factors affecting durability of the tread portion, and in order to enhance durability of the tread portion, strain and temperature rise, generated in the tread portion, are required to be coped with.

For coping with this, in conventional tires, generation of strain is suppressed in the tread portion mainly by adding a reinforcing member into the tread portion or by raising rigidity of the tread portion. However, in this case, along with the increase in the number of members in the tire and a weight of the tire, a cost of the tire possibly rises. Accordingly, regarding durability of the tread portion, suppression of the temperature rise by cooling the tread portion is required. In addition, cooling of the tread portion may become more important in a tread center portion side than a shoulder portion side depending on the internal structure of the tread portion or the condition of use of the tire, the realization of such a demand is required, too.

Here, in a tire provided with a plurality of blocks, generally, the plurality of blocks is arranged between two circumferential grooves, and a plurality of lateral grooves is formed between the blocks. In such a tire, heat radiation is promoted by an air flow generated in the circumferential groove, and the tread portion is cooled. However, it is difficult to adjust heat radiation of the circumferential groove by controlling the air flow in the circumferential groove. Therefore, in a tire provided with a plurality of blocks between a circumferential groove on a tread center portion side and a circumferential groove on the shoulder portion side, more heat radiation may sometimes occur in the circumferential groove on the shoulder portion side than in the circumferential groove on the tread center portion side. In this case, a cooling effect of the tread portion by the circumferential groove on the tread center portion side cannot be increased. Therefore, it is difficult to suppress the temperature rise in the tread portion on the tread center portion side.

Moreover, a tire in which the temperature rise on the tread portion is suppressed by a block groove formed in a shoulder block row has been known (refer to Patent Literature 1).

However, in the conventional tire described in Patent Literature 1, a block groove is required to be formed in a tread of the block along a tire circumferential direction. Therefore, the block groove cannot be formed in some cases depending on a shape of the block or a required performance of the block.

Attention is also drawn to the disclosures of JP2007-106314, EP0561531, US2012/291934, JP2000-108615 and EP0485883, in which the outer circumferential grooves are not shaped so as to effectively direct an air flow onto a wall surface of a downstream block.

### Prior Art

### Patent Literature

Patent Literature 1: Japanese Patent Laid-Open No. 2010-125998

### SUMMARY OF THE INVENTION

### Problems to be Solved by Invention

The present invention was made in view of the above-described conventional problems and an object thereof is, in a tire provided with a plurality of blocks between a circumferential groove on a tread center portion side and a circumferential groove on a shoulder portion side, to enhance heat radiation of the circumferential groove on the tread center portion side of the plurality of blocks and to increase a cooling effect of a tread portion by the circumferential groove on the tread center portion side.

### Means for solving Problems

The present invention is a tire comprising: a first circumferential groove arranged between a tread center portion and a shoulder portion; a second circumferential groove arranged on a tread center portion side of the first circumferential groove; a plurality of lateral grooves opened to the first circumferential groove and the second circumferential groove; and a plurality of blocks on a tread portion partitioned by the first circumferential groove, the second circumferential groove, and the plurality of lateral grooves. An air flow in a direction opposite to a tire rotating direction is generated in the first circumferential groove and the second circumferential groove during running of a vehicle. Each block of the plurality of blocks has: a first wall surface formed from a position where the lateral groove on a downstream side of the air flow is opened to the first circumferential groove, toward an upstream side of the air flow; a second wall surface formed from a position where the lateral groove on the downstream side of the air flow is opened to the second circumferential groove, toward the upstream side of the air flow; and a block corner portion formed at a position where the lateral groove on the upstream side of the air flow is opened to the first circumferential groove. When the two blocks on the upstream side and the downstream side of the air flow adjacent in the tire circumferential direction are viewed, a virtual surface obtained by extending, on the downstream side of the air flow, the first wall surface of the block on the upstream side passes through a position in the first circumferential groove on the shoulder portion side of the block corner portion of the block on the downstream side and intersects with the block on the downstream side in the first circumferential groove. A groove width of the second circumferential groove gradually increases toward the downstream side of the air flow at the second wall surface of the block.

### EFFECTS OF THE INVENTION

According to the present invention, in the tire provided with the plurality of blocks between the circumferential groove on the tread center portion side and the circumferential groove on the shoulder portion side, heat radiation of the circumferential groove on the tread center portion side of the plurality of blocks can be enhanced, and thus a cooling effect of the tread portion by the circumferential groove on the tread center portion side can be increased.

### BRIEF DESCRIPTION OF THE DRAWINGS

Fig. 1 is a plan view illustrating a tread pattern of a tire of the present embodiment;
Fig. 2 is a plan view illustrating a part of the tread pattern of the present embodiment;
Fig. 3 is a perspective view of a tread portion illustrated in Fig. 2;
Fig. 4 is a plan view illustrating a first block corner portion formed in a curved shape, which is not according to the present invention but is useful for understanding the present invention;
Fig. 5 is a plan view illustrating a block of another embodiment;
Fig. 6 is a plan view illustrating a block of another embodiment, which is not according to the present invention but is useful for understanding the present invention;
Fig. 7 is a plan view illustrating a block of another embodiment, which is not according to the present invention but is useful for understanding the present invention; and
Fig. 8 is a plan view illustrating a tread pattern of a conventional product.

### DESCRIPTION OF THE PREFERRED EMBODIMENTS

An embodiment of a tire of the present invention will be described by referring to the attached drawings.

The tire of the present embodiment is a pneumatic tire for a vehicle (a tire for heavy load or a tire for passenger car, for example) and is formed having a known structure by a general tire constituent member. Namely, the tire includes a pair of bead portions, a pair of side wall portions located outside the pair of bead portions in a tire radial direction, a tread portion in contact with a road surface, and a pair of shoulder portions located between the tread portion and the pair of side wall portions. Furthermore, the tire includes a pair of bead cores, a carcass arranged between the pair of bead cores, a belt arranged on an outer periphery side of the carcass, and a tread rubber having a predetermined tread pattern.

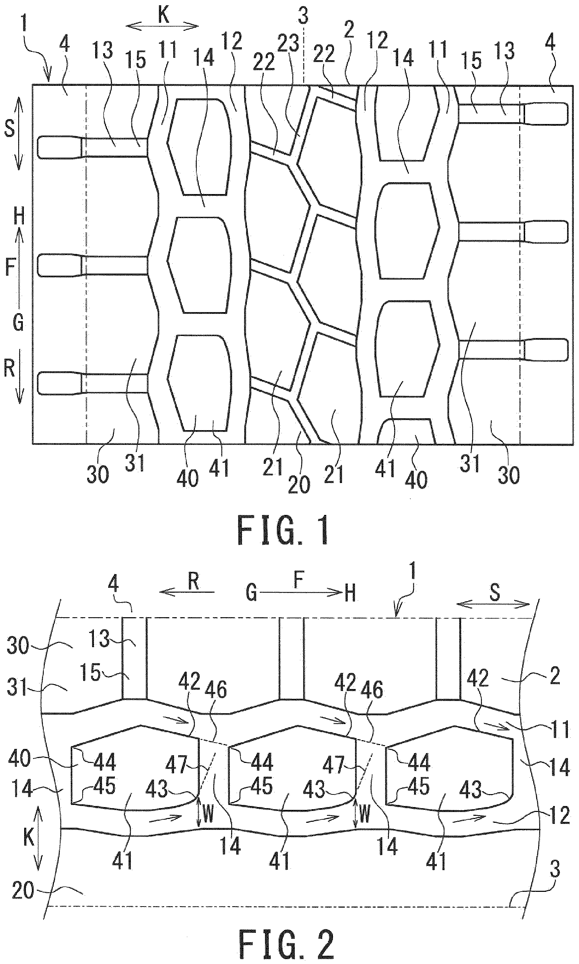

Fig. 1 is a plan view illustrating a tread pattern of a tire 1 of the present embodiment and schematically illustrates a part of a tread portion 2 in a tire circumferential direction S.

Note that the tire 1 is a tire for which a rotating direction during forward movement of the vehicle is designated and it rotates in a tire rotating direction R during forward movement of the vehicle. The tire rotating direction R is designated in correspondence to the tread pattern of the tire 1. The tire 1 is attached to the vehicle so that the tire rotating direction R is matched.

As illustrated, the tire 1 includes a plurality of circumferential grooves 11 and 12, a plurality of lug grooves 13, a plurality of lateral grooves 14, and a plurality of block rows 20, 30 and 40, in the tread portion 2. Each of the plurality of circumferential grooves 11 and 12 is a main groove (circumferential main groove) extending in the tire circumferential direction S, and is continuously formed along the tire circumferential direction S. Moreover, a plurality of circumferential grooves 11 and 12 comprises a first circumferential groove 11 arranged between a tread center portion 3 and a shoulder portion 4 and a second circumferential groove 12 arranged on the tread center portion 3 side of the first circumferential groove 11. The tread center portion 3 is a center part of the tread portion 2 in a tire width direction K, and a tire equatorial plane is located on the tread center portion 3. The shoulder portion 4 is located on an outer side of the tread portion 2 in the tire width direction K.

The first circumferential groove 11 is an outer-side circumferential groove formed on an outer side of the second circumferential groove 12 in the tire width direction K (the shoulder portion 4 side), and is arranged between the second circumferential groove 12 and the shoulder portion 4 (tread end) . The tire 1 includes two first circumferential grooves 11 formed inside of both the shoulder portions 4 in the tire width direction K. The second circumferential groove 12 is a center-side circumferential groove formed inside of the first circumferential groove 11 in the tire width direction K (the tread center portion 3 side), and is arranged between the first circumferential groove 11 and the tread center portion 3. The tire 1 includes two second circumferential grooves 12 formed on both sides of the tread center portion 3 in the tire width direction K. A pair of the first circumferential groove 11 and the second circumferential groove 12 is arranged between the tread center portion 3 and the shoulder portion 4 and is formed on both sides of the tread center portion 3 in the tire width direction K. The tread portion 2 is partitioned by the plurality of circumferential grooves 11 and 12, and a plurality of the block rows 20, 30, and 40 is formed on the tread portion 2.

Each of the plurality of block rows 20, 30, and 40 is a land portion extending along the tire circumferential direction S, and has a corresponding plurality of blocks 21, 31, and 41. The plurality of block rows 20, 30, and 40 comprises one center block row 20, two shoulder block rows 30, and two intermediate block rows 40. The center block row 20 has a plurality of connecting grooves 22 and one circumferential sub groove 23 extending in the tire circumferential direction S and is arranged on the tread center portion 3. The circumferential sub groove 23 is a circumferential direction narrow groove narrower than the circumferential grooves 11 and 12 and is connected to the two second circumferential grooves 12 by the plurality of connecting grooves 22. The center block row 20 is partitioned by the plurality of connecting grooves 22 and the one circumferential sub groove 23, and the plurality of blocks 21 is formed in the center block row 20.

The shoulder block row 30 has a plurality of lug grooves 13 and is arranged on an outermost side (shoulder portion 4 side) in the tire width direction K in the tread portion 2. The lug groove 13 extends in the tire width direction K and is formed from the first circumferential groove 11 to the shoulder portion 4. The plurality of blocks 31 of the shoulder block row 30 is sequentially arranged in the tire circumferential direction S, and the lug groove 13 is formed between the blocks 31 adjacent in the tire circumferential direction S. In addition, the lug groove 13 is formed on the shoulder portion 4 side of the first circumferential groove 11 and is opened to the first circumferential groove 11. The tire 1 includes a raised portion 15 formed within each of the lug grooves 13. The raised portion 15 is raised from a groove bottom of the lug groove 13 and connects groove walls (wall surfaces of the block 31) on both sides of the lug groove 13. Here, the raised portion 15 is a tie bar. At least a part of the lug groove 13 is shallower than the first circumferential groove 11 by the raised portion 15.

The intermediate block row 40 has a plurality of lateral grooves 14 and is arranged between the center block row 20 and the shoulder block row 30 in the tread portion 2. Each of the plurality of lateral grooves 14 is a width direction groove extending in the tire width direction K and is formed from the first circumferential groove 11 to the second circumferential groove 12. The plurality of blocks 41 of the intermediate block row 40 is sequentially arranged in the tire circumferential direction S, and the lateral groove 14 is formed between the blocks 41 adjacent in the tire circumferential direction S. Furthermore, the lateral groove 14 is formed between the first circumferential groove 11 and the second circumferential groove 12 and is opened to the first circumferential groove 11 and the second circumferential groove 12.

As described above, the tire 1 includes the plurality of blocks 41 of the intermediate block row 40 arranged between the tread center portion 3 and the shoulder portion 4. The first circumferential groove 11 extends along the wall surfaces of the plurality of blocks 41 on the shoulder portion 4 side, whereas the second circumferential groove 12 extends along the wall surfaces of the plurality of blocks 41 on the tread center portion 3 side. The plurality of lateral grooves 14 is arranged apart from each other in the tire circumferential direction S and cross the intermediate block row 40 between the first circumferential groove 11 and the second circumferential groove 12. The plurality of blocks 41 is partitioned by the first circumferential groove 11, the second circumferential groove 12, and the plurality of lateral grooves 14 on the tread portions 2, and each of the blocks 41 is formed in a predetermined polygonal shape when viewed from an outside in the tire radial direction.

The tire 1 is attached to the vehicle and rotates in the tire rotating direction R with running (forward movement) of the vehicle. During running of the vehicle (tire rotation) by forward movement of the vehicle, an air flow in a predetermined direction is generated in the first circumferential groove 11 and the second circumferential groove 12. The air flow is a relative flow (wind) of air generated by rotation of the tire 1 and is generated in a direction opposite to the tire rotating direction R. An arrow F illustrated in Fig. 1 shows a direction of the air flow generated in the first circumferential groove 11 and the second circumferential groove 12. The air flow in the same direction is generated in the first circumferential groove 11 and the second circumferential groove 12. In the tire 1 of the present embodiment, by the plurality of blocks 41 formed between the first circumferential groove 11 and the second circumferential groove 12, the air flow is controlled, and the heat radiation in the first circumferential groove 11 and the second circumferential groove 12 is adjusted. As a result, the heat radiation of the second circumferential groove 12 located on the tread center portion 3 side is enhanced. Hereinafter, the adjustment of the heat radiation will be described in detail.

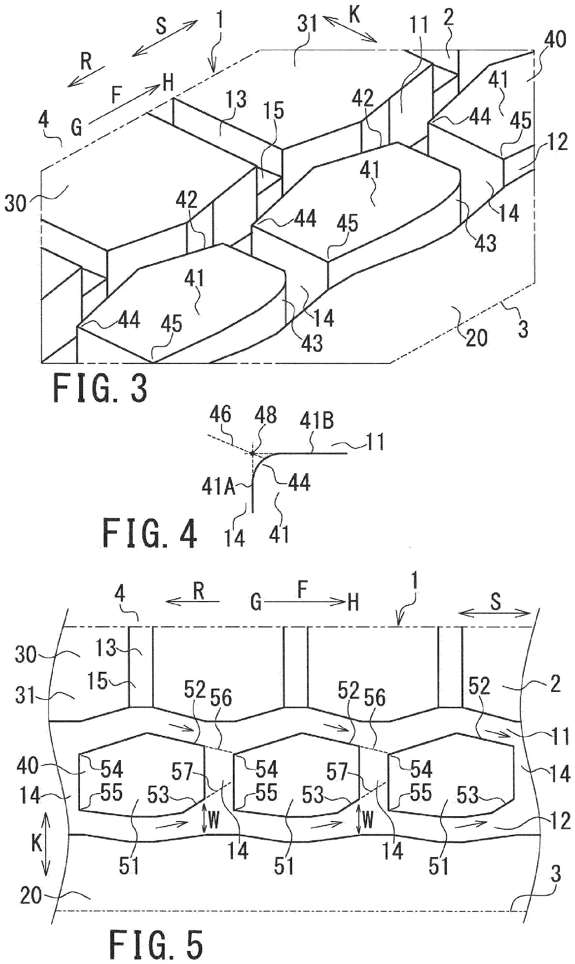

Fig. 2 is a plan view illustrating a part of the tread pattern of the present embodiment and illustrates a portion including the block 41 in a state in which Fig. 1 is rotated clockwise by 90°. In addition, in Fig. 2, the center block row 20 is simplified. Fig. 3 is a perspective view of the tread portion 2 illustrated in Fig. 2.

As illustrated, each block 41 of the plurality of blocks 41 has a first wall surface 42 on the shoulder portion 4 side, a second wall surface 43 on the tread center portion 3 side, a first block corner portion 44 on the shoulder portion 4 side, and a second block corner portion 45 on the tread center portion 3 side. In the first circumferential groove 11 and the second circumferential groove 12 (refer to the air flow direction F), the air flows from an upstream side G of the air flow toward a downstream side H of the air flow and cools the tread portion 2.

The first wall surface 42 of the block 41 is formed from a position where the lateral groove 14 on the downstream side H of the air flow is opened to the first circumferential groove 11, toward the upstream side G of the air flow. The second wall surface 43 of the block 41 is formed from a position where the lateral groove 14 on the downstream side H of the air flow is opened to the second circumferential groove 12, toward the upstream side G of the air flow. The first wall surface 42 is located in the first circumferential groove 11, and the second wall surface 43 is located in the second circumferential groove 12. Here, the first wall surface 42 is a plane inclined to the tread center portion 3 side with respect to the tire circumferential direction S toward the downstream side H of the air flow. In contrast to this, the second wall surface 43 is a curved surface inclined to the shoulder portion 4 side with respect to the tire circumferential direction S toward the downstream side H of the air flow. In addition, the second wall surface 43 is a projecting surface curved in an arc shape and smoothly connects to the wall surface of the block 41 around it. On the tread center portion 3 side of the block 41, the second wall surface 43 is curved toward an inside of the lateral groove 14 on the downstream side H of the air flow.

The first block corner portion 44 of the block 41 is a corner portion of the block 41 formed at a position where the lateral groove 14 on the upstream side G of the air flow is opened to the first circumferential groove 11, and is formed at a position where the wall surface of the block 41 in the lateral groove 14 and the wall surface of the block

41 in the first circumferential groove 11 intersect with each other. The second block corner portion 45 of the block 41 is a corner portion of the block 41 formed at a position where the lateral groove 14 on the upstream side G of the air flow is opened to the second circumferential groove 12 and is formed at a position where the wall surface of the block 41 in the lateral groove 14 and the wall surface of the block 41 in the second circumferential groove 12 intersect with each other. The wall surfaces of the block 41 are formed in directions different from each other at the first block corner portion 44 and the second block corner portion 45 as boundaries.

When the two blocks 41 on the upstream side G and the downstream side H of the air flow adjacent in the tire circumferential direction S are viewed, a virtual surface (first virtual surface) 46 extended from the first wall surface 42 of the block 41 on the upstream side G is located on an outer side of the lateral groove 14 (lateral groove 14 on the downstream side H) between the two blocks 41. The first virtual surface 46 is an extension surface (virtual extension surface) obtained by virtually extending the first wall surface 42 on the downstream side H of the air flow and smoothly continues from the first wall surface 42 so as to form the same plane as the first wall surface 42. In addition, the first virtual surface 46 is extended toward the block 41 on the downstream side H and is arranged along the first circumferential groove 11. In all the blocks 41 of the intermediate block row 40, the first virtual surface 46 of the block 41 on the upstream side G passes through a position in the first circumferential groove 11 on the shoulder portion 4 side of the first block corner portion 44. When the first virtual surface 46 passes through the position in the first circumferential groove 11, the first virtual surface 46 intersects with the block 41 (wall surface of the block 41) on the downstream side H in the first circumferential groove 11.

A groove width W of the second circumferential groove 12 gradually increases toward the downstream side H (lateral groove 14 on the downstream side H) of the air flow at the second wall surface 43 of the block 41. Furthermore, when the two blocks 41 on the upstream side G and the downstream side H of the air flow adjacent in the tire circumferential direction S are viewed, a virtual surface (second virtual surface) 47 extended from the second wall surface 43 of the block 41 on the upstream side G is extended toward the shoulder portion 4 side. The second virtual surface 47 is an extension surface (virtual extension surface) obtained by virtually extending the second wall surface 43 on the downstream side H of the air flow and smoothly continues from the second wall surface 43 so as to form the same plane as the second wall surface 43. In all the blocks 41 of the intermediate block row 40, the second virtual surface 47 of the block 41 on the upstream side G is extended toward an inside of the lateral groove 14 (lateral groove 14 on the downstream side H) between the two blocks 41 without intersecting with the second block corner portion 45 of the block 41 on the downstream side H. The second virtual surface 47 passes through the lateral groove 14 and intersects with the block 41 (wall surface of the block 41) on the downstream side H in the lateral groove 14. Alternatively, the second virtual surface 47 passes through the lateral groove 14 and is extended to the first circumferential groove 11.

In the tire 1 described above, the first virtual surface 46 intersects with the first block corner portion 44 or passes through the position in the first circumferential groove 11, and thus the air having flowed along the first wall surface 42 becomes hard to flow into the lateral groove 14 easily. Accordingly, the inflow of air from the first circumferential groove 11 to the lateral groove 14 and the second circumferential groove 12 is suppressed, and occurrences of backward flow, swirl flow, and stagnation of the air in the second circumferential groove 12 are prevented. The air in the second circumferential groove 12 is not disturbed by the air flowing in from the lateral groove 14, and smoothly flows toward the downstream side H in the second circumferential groove 12. Along with this, a flow rate of the air which is a cooling medium increases in the second circumferential groove 12, and cooling of the tread portion 2 is promoted. In addition, since the air flow in the first circumferential groove 11 deviates from the first block corner portion 44, a pressure rise of the air at the first block corner portion 44 is suppressed.

Since the groove width W of the second circumferential groove 12 gradually increases at the second wall surface 43, a pressure of the air around the second wall surface 43 becomes lower than the pressure of the air around the second block corner portion 45 on the second circumferential groove 12 side of one block 41. Along with this, the air is drawn from the upstream side G of the second wall surface 43 toward the periphery of the second wall surface 43 in the second circumferential groove 12, and the air flow is accelerated. In addition, since the air flow hits the second block corner portion 45, the pressure of the air rises at the second block corner portion 45. As a result, the pressure of the air at the second block corner portion 45 becomes higher than the pressure of the air at the first block corner portion 44 in the lateral groove 14, and thus the air flows from the second block corner portion 45 toward the first block corner portion 44. Accordingly, an air flow from the second circumferential groove 12 toward the lateral groove 14 is generated, and thus inflow of the air from the lateral groove 14 to the second circumferential groove 12 is suppressed. Furthermore, the air flow in the second circumferential groove 12 is further accelerated.

As described above, in the tire 1 of the present embodiment, heat radiation of the first circumferential groove 11 and the second circumferential groove 12 can be adjusted by controlling the air flow during running of a vehicle. Furthermore, the heat radiation can be promoted by accelerating the air flow in the second circumferential groove 12 on the tread center portion 3 side. Therefore, the heat radiation of the second circumferential groove 12 can be enhanced, and the cooling effect of the tread portion 2 by the second circumferential groove 12 can be increased. Along with this, the temperature rise of the tread portion 2 can be suppressed by cooling the tread portion 2 on the tread center portion 3 side. Durability of the tread portion 2 can also be effectively enhanced by lowering the temperature around the belt in the tread portion 2, in which a heat generation easily occurs.

When the second virtual surface 47 is extended toward the inside of the lateral groove 14, the air flowing along the second wall surface 43 easily flows into the lateral groove 14. In addition, the second wall surface 43 is inclined to the shoulder portion 4 side, and thus the air easily flows from the second circumferential groove 12 toward the lateral groove 14. When the second wall surface 43 is a curved surface, the air smoothly flows along the second wall surface 43, and the air flow directed toward the lateral groove 14 is easily generated. Accordingly, the pressure of the air can be reliably lowered around the second wall surface 43, and the air flow in the second circumferential groove 12 can be further accelerated. By forming the raised portion 15 in the lug groove 13 of the shoulder block row 30, the air flowing in the first circumferential groove 11 can be prevented from flowing out through the lug groove 13. As a result, the air flow can be concentrated to the first circumferential groove 11.

When the groove width of the lateral groove 14 is wider than the groove width W of the second circumferential groove 12, the inflow of air from the first circumferential groove 11 is increased, and thus backward flow of the air in the second circumferential groove 12 easily occurs. In the same way, when the groove width of the first circumferential groove 11 is wider than the groove width of the lateral groove 14, backward flow of the air toward the second circumferential groove 12 easily occurs, and thus the cooling effect by the second circumferential groove 12 may be affected. Therefore, it is preferable for the groove width W of the second circumferential groove 12 to be wider than the groove width of the lateral groove 14, and it is preferable for the groove width of the lateral groove 14 to be wider than the groove width of the first circumferential groove 11. Thus, backward flow of the air can more surely be suppressed. In addition, since the groove width W of the second circumferential groove 12 is wider than the groove width of the lateral groove 14 and the groove width of the first circumferential groove 11, the flow rate of the air in the second circumferential groove 12 is increased, and thus the cooling effect by the second circumferential groove 12 can be promoted.

The groove width W of the second circumferential groove 12 is permissible as long as it gradually increases toward the downstream side H of the air flow at least on the second wall surface 43. Therefore, in addition to the second wall surface 43, the groove width W of the second circumferential groove 12 may be gradually increased toward the downstream side H of the air flow at the upstream side G of the second wall surface 43. Moreover, the first block corner portion 44 and the second block corner portion 45 may be corner portions formed in bent shapes or may be corner portions formed in curved shapes.

Fig. 4 is a plan view illustrating the first block corner portion 44 formed in a curved shape.

In this case, which is not according to the present invention but is useful for understanding the present invention, the first virtual surface 46 passes through, for example, a virtual intersection position 48, and intersects with the first block corner portion 44 as illustrated. The virtual intersection position 48 is a position where virtual surfaces extended from wall surfaces 41A and 41B of the block 41 on the both sides of the first block corner portion 44 intersect with each other. The one wall surface 41A is a wall surface of the block 41 in the lateral groove 14, and the other wall surface 41B is a wall surface of the block 41 in the first circumferential groove 11. The air easily flows from the lateral groove 14 to the first circumferential groove 11, by forming the first block corner portion 44 into a curved shape.

Subsequently, blocks of other embodiments will be described. Each of the following blocks is an example in which a part of the shape of the block 41 is changed, and an effect similar to the above-described effect is exerted. In each block, the same names as those in the block 41 are given to the same configurations as the block 41, and detailed explanation of each configuration will be omitted. Moreover, in the following description, explanation for the same matters as the already-described matters will be omitted.

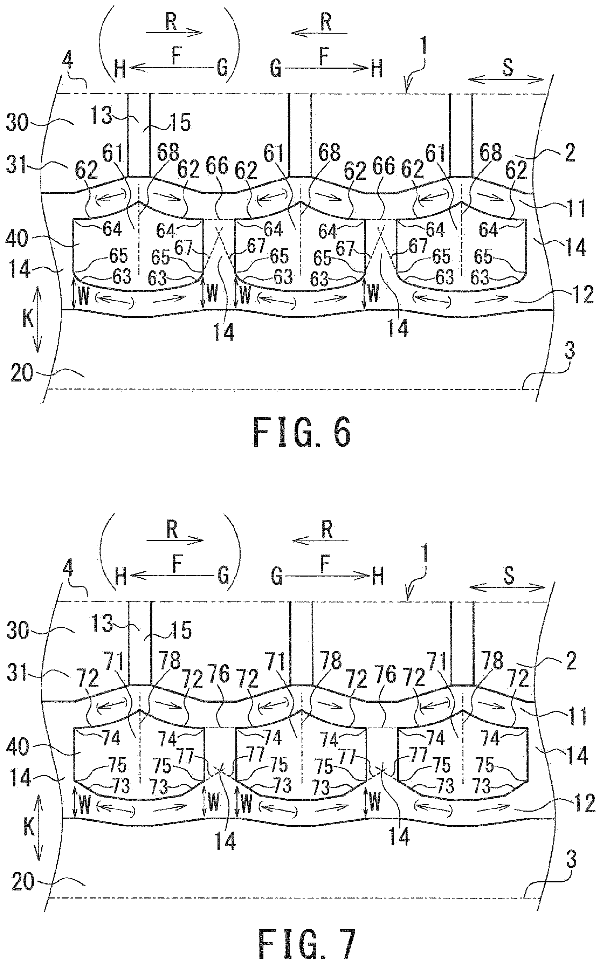

Figs. 5 to 7 are plan views illustrating blocks 51, 61, and 71 of other embodiments and illustrate a part of tread patterns including the blocks 51, 61, and 71 similarly to Fig. 2. The embodiments illustrated in Figs. 6 and 7 are not according to the present invention but are useful for understanding the present invention.

The block 51 illustrated in Fig. 5 has a first wall surface 52, a second wall surface 53, a first block corner portion 54, and a second block corner portion 55. A first virtual surface 56 is an extension surface extended from the first wall surface 52, and a second virtual surface 57 is an extension surface extended from the second wall surface 53. Here, only the second wall surface 53 is different from the second wall surface 43 of the block 41. The second wall surface 53 of the block 51 is a plane inclined to the shoulder portion 4 side with respect to the tire circumferential direction S toward the downstream side H of the air flow. The second wall surface 53 is inclined toward the inside of the lateral groove 14 on the downstream side H of the air flow. In this second wall surface 53, the air can easily flow from the second circumferential groove 12 toward the lateral groove 14. Therefore, the pressure of the air can be reliably lowered around the second wall surface 53, and the air flow in the second circumferential groove 12 can be further accelerated.

In the block 61 illustrated in Fig. 6, in a plan view of the block 61 when viewed from an outside in the tire radial direction, the block 61 is formed line-symmetrically with respect to a center line 68 passing through the center in the tire circumferential direction S. Therefore, the block 61 has a first wall surface 62, a second wall surface 63, a first block corner portion 64, and a second block corner portion 65, on each of both sides of the center line 68. In addition, a first virtual surface 66 is an extension surface extended from each of the first wall surfaces 62 on the both sides of the center line 68, and a second virtual surface 67 is an extension surface extended from each of the second wall surfaces 63 on the both sides of the center line 68. The first wall surface 62 is a curved surface recessed in the block 61, and the two first wall surfaces 62 intersect with each other on the center line 68. In this block 61, the tire rotating direction R can be set in both directions of the tire circumferential direction S. Namely, even if the air flow direction F becomes an opposite direction, the block 61 satisfies the conditions similar to those of the block 41 and acts in the same way as the block 41. Therefore, it is not necessary to designate the tire rotating direction R when the tire is to be attached, and convenience of a user is improved.

In the block 71 illustrated in Fig. 7, in the same way as the block 61, the block 71 is formed line-symmetrically with respect to a center line 78 passing through the center in the tire circumferential direction S, in a plan view of the block 71 when viewed from the outside in the tire radial direction. Accordingly, the block 71 has a first wall surface 72, a second wall surface 73, a first block corner portion 74, and a second block corner portion 75 on each of both sides of the center line 78. Moreover, a first virtual surface 76 is an extension surface extended from each of the first wall surfaces 72 on both sides of the center line 78, and a second virtual surface 77 is an extension surface extended from each of the second wall surfaces 73 on the both sides of the center line 78. The first wall surface 72 is a curved surface recessed in the block 71, and the two first wall surfaces 72 intersect with each other on the center line 78. The second wall surface 73 of the block 71 is a plane inclined to the shoulder portion 4 side with respect to the tire circumferential direction S toward the downstream side H of the air flow in the same way as the second wall surface 53 of the block 51. The second wall surface 73 is inclined toward the inside of the lateral groove 14 on the downstream side H of the air flow. In this block 71, in the same way as the block 61, the tire rotating direction R can be set in both directions of the tire circumferential direction S. Namely, even if the air flow direction F becomes an opposite direction, the block 71 satisfies the conditions similar to those of the block 41, and the effect similar to that of the block 41 is exerted. Therefore, it is not necessary to designate the tire rotating direction R when the tire is to be attached, and convenience of a user is improved.

When the tire 1 is a tire for heavy load (such as a tire for truck/bus, for example), a heat generation amount of the tread portion 2 tends to be larger. Therefore, the present invention is suitable for the tire for heavy load. However, the present invention can be applied to various tires other than the tire for heavy load.

### (Tire test)

In order to investigate the effects of the present invention, tires of two embodiments (referred to as embodied products 1 and 2) and a tire of the conventional example (referred to as a conventional product) were produced, and their performances were evaluated. Each of the embodied products 1 and 2 includes a plurality of blocks 61 illustrated in Fig. 6 in the intermediate block row 40. The embodied products 1 and 2 are not according to the present invention but are useful for understanding the present invention. In the embodied product 2, the groove width W of the second circumferential groove 12 is wider than the groove width of the lateral groove 14, and the groove width of the lateral groove 14 is wider than the groove width of the first circumferential groove 11. That is, in embodied product 2, the whole of the second circumferential groove 12 is wider than the widest part of the lateral groove 14, and the whole of the lateral groove 14 is wider than the widest part of the first circumferential groove 11. The condition of the groove width of the embodied product 1 differs from the condition of the groove width of the embodied product 2. In particular, in the embodied product 1, the widest part of the second circumferential groove 12 is wider than the lateral groove 14 and the first circumferential groove 1, and the lateral groove 14 and the first circumferential groove 1 are formed so as to have the same groove width. The conventional product is different from the embodied product 1 in the plurality of blocks of the intermediate block row 40.

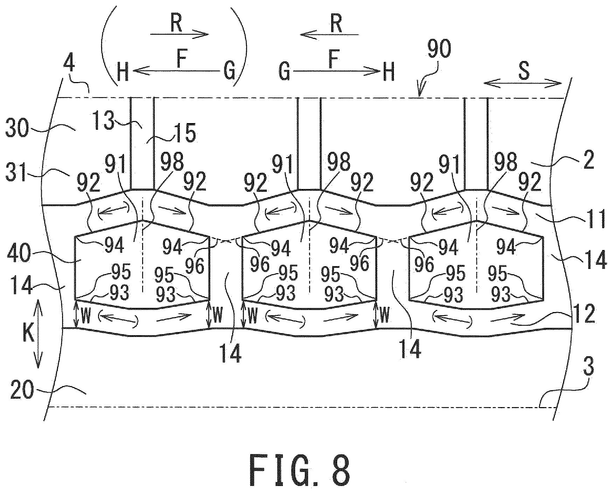

Fig. 8 is a plan view illustrating a tread pattern of the conventional product and illustrates a part of the tread pattern similarly to Fig. 6.

As illustrated, in a tire 90 of the conventional product, the block 91 is formed line-symmetrically with respect to a center line 98 passing through the center in the tire circumferential direction S, in a plan view of the block 91 of the intermediate block row 40 when viewed from the outside in the tire radial direction. Furthermore, the block 91 has a first wall surface 92, a second wall surface 93, a first block corner portion 94, and a second block corner portion 95, on each of both sides of the center line 98. A first virtual surface 96 is an extension surface extended from each of the first wall surfaces 92 on both sides of the center line 98. When the two blocks 91 on the upstream side G and the downstream side H of the air flow adjacent in the tire circumferential direction S are viewed, the first virtual surface 96 of the block 91 on the upstream side G is extended toward the inside of the lateral groove 14 between the two blocks 91 and intersects with the block 91 on the downstream side H in the lateral groove 14. The groove width W of the second circumferential groove 12 is a constant width at the second wall surface 93.

A drum durability test was conducted using the embodied products 1 and 2 and the conventional product, under the following conditions:
Tire size: 11R22.5
Tire load: 2740 kgf (=26.9 kN)
Tire internal pressure: 700 kPa
Drum speed: 65 km/h
Temperature during test: 38°C

In the test, the embodied products 1 and 2 and the conventional product were brought into contact with an outer circumferential surface of a drum, and the same load was applied to the embodied products 1 and 2 and the conventional product. In that state, the drum was rotated, and the embodied products 1 and 2 and the conventional product were rotated (made to run) by the drum. Thereby, traveling distances sufficient for belts of the embodied products 1 and 2 and the conventional product to endure were measured, and belt durability of the embodied products 1 and 2 and the conventional product was evaluated. Furthermore, heat transfer rate at the groove bottom of the second circumferential groove 12 was measured in the embodied products 1 and 2 and the conventional product, and heat radiation of the second circumferential groove 12 was evaluated.

**[Table 1]**

| | EMBODIED PRODUCT 1 | EMBODIED PRODUCT 2 | CONVENTIONAL PRODUCT |
|---|---|---|---|
| HEAT TRANSFER RATE AT GROOVE BOTTOM OF SECOND CIRCUMFERENTIAL GROOVE | 140 | 145 | 100 |
| BELT DURABILITY INDICATED BY TRAVELING DISTANCE | 115 | 117 | 100 |

Table 1 shows test results of the embodied products 1 and 2 and the conventional product. The test results are expressed by index with the conventional product at 100 and indicate that the larger the numerical value is, the higher the performances.

As shown in Table 1, the heat transfer rate (140) of the embodied product 1 and the heat transfer rate (145) of the embodied product 2 are remarkably higher than the heat transfer rate of the conventional product. As a result, it is known that in the embodied products 1 and 2, the heat radiation of the second circumferential groove 12 is enhanced. Furthermore, the belt durability (115) of the embodied product 1 and the belt durability (117) of the embodied product 2 are higher than the belt durability of the conventional product. It is known that in the embodied products 1 and 2, the cooling effect by the second circumferential groove 12 becomes higher, and the belt durability is enhanced. The heat transfer rate of the embodied product 2 is higher than the heat transfer rate of the embodied product 1 and the belt durability of the embodied product 2 is higher than the belt durability of the embodied product 1. From these, it is known that in the embodied product 2, the heat radiation of the second circumferential groove 12 is enhanced, and thus the cooling effect by the second circumferential groove 12 becomes higher.

### Reference Signs List

- 1: tire
- 2: tread portion
- 3: tread center portion
- 4: shoulder portion
- 11: first circumferential groove
- 142: second circumferential groove
- 13: lug groove
- 14: lateral groove
- 15: raised portion
- 20: center block row
- 21: block
- 22: connecting groove
- 23: circumferential direction sub groove
- 30: shoulder block row
- 31: block
- 40: intermediate block row
- 41: block
- 42: first wall surface
- 43: second wall surface
- 44: first block corner portion
- 45: second block corner portion
- 46: first virtual surface
- 47: second virtual surface
- 48: virtual intersection position
- 51: block
- 52: first wall surface
- 53: second wall surface
- 54: first block corner portion
- 55: second block corner portion
- 56: first virtual surface
- 57: second virtual surface
- 61: block
- 62: first wall surface
- 63: second wall surface
- 64: first block corner portion
- 65: second block corner portion
- 66: first virtual surface
- 67: second virtual surface
- 68: center line
- 71: block
- 72: first wall surface
- 73: second wall surface
- 74: first block corner portion
- 75: second block corner portion
- 76: first virtual surface
- 77: second virtual surface
- 78: center line
- F: air flow direction
- G: upstream side
- H: downstream side
- K: tire width direction
- R: tire rotating direction
- S: tire circumferential direction
- W: groove width

## Claims

1. A tire (1) comprising:
a first circumferential groove (11) arranged between a tread center portion (3) and a shoulder portion (4);
a second circumferential groove (12) arranged on a tread center portion side of the first circumferential groove (11);
a plurality of lateral grooves (14) opened to the first circumferential groove (11) and the second circumferential groove (12); and
a plurality of blocks (41) on a tread portion partitioned by the first circumferential groove (11), the second circumferential groove (12), and the plurality of lateral grooves (14),
an air flow in a direction opposite to a tire rotating direction being generated in the first circumferential groove (11) and the second circumferential groove (12) during running of a vehicle; wherein
each block (41) of the plurality of blocks (41) has:
a first wall surface (42) formed from a position where the lateral groove (14) on a downstream side (H) of the air flow is opened to the first circumferential groove (11), toward an upstream side (G) of the air flow;
a second wall surface (43) formed from a position where the lateral groove (14) on the downstream side (H) of the air flow is opened to the second circumferential groove (12), toward the upstream side (G) of the air flow; and
a block corner portion (44) formed at a position where the lateral groove (14) on the upstream side (G) of the air flow is opened to the first circumferential groove (11); and
when the two blocks (41) on the upstream side (G) and the downstream side (H) of the air flow adjacent in the tire circumferential direction (S) are viewed, a virtual surface (46) obtained by extending, on the downstream side (H) of the air flow, the first wall surface (42) of the block (41) on the upstream side (G) passes through a position in the first circumferential groove (11) on the shoulder portion side of the block corner portion (44) of the block (41) on the downstream side (H) and intersects with the block (41) on the downstream side (H) in the first circumferential groove (11); and
a groove width (W) of the second circumferential groove (12) gradually increases toward the downstream side (H) of the air flow at the second wall surface (43) of the block (41).

2. The tire (1) according to claim 1, wherein
when the two blocks (41) on the upstream side (G) and the downstream side (H) of the air flow adjacent in the tire circumferential direction (S) are viewed, a virtual surface (47) obtained by extending, on the downstream side (H) of the air flow, the second wall surface (43) of the block on the upstream side (G) is extended toward an inside of the lateral groove (14) between the two blocks (41).

3. The tire (1) according to claim 1 or 2, wherein
the second wall surface (43) of the block (41) is inclined to the shoulder portion (4) side with respect to the tire circumferential direction (S) toward the downstream side (H) of the air flow.

4. The tire (1) according to any of claims 1 to 3, wherein
the second wall surface (43) of the block (41) is a curved surface curved toward the inside of the lateral groove (14) on the downstream side (H) of the air flow.

5. The tire (1) according to any of claims 1 to 3, wherein
the second wall surface (43) of the block (41) is a plane inclined to the shoulder portion (4) side with respect to the tire circumferential direction (S) toward the downstream side (H) of the air flow.

6. The tire (1) according to any of claims 1 to 5, further comprising:
a lug groove (13) formed on a shoulder portion side of the first circumferential groove (11) and opened to the first circumferential groove (11); and
a raised portion (15) raised from a groove bottom of the lug groove (13) and connecting groove walls on both sides of the lug groove (13).

7. The tire (1) according to any of claims 1 to 6, wherein
the groove width of the second circumferential groove (12) is wider than a groove width of the lateral groove (14) ; and
the groove width of the lateral groove (14) is wider than a groove width of the first circumferential groove (11) .

8. The tire (1) according to any of claims 1 to 7, wherein
The first circumferential groove (11) is bent.

## Patentansprüche

1. Reifen (1), der Folgendes beinhaltet:
eine erste umlaufende Rille (11), die zwischen einem Laufflächenmittelabschnitt (3) und einem Schulterabschnitt (4) angeordnet ist;
eine zweite umlaufende Rille (12), die auf einer Laufflächenmittelabschnittsseite der ersten umlaufenden Rille (11) angeordnet ist;
eine Vielzahl von lateralen Rillen (14), die zu der ersten umlaufenden Rille (11) und der zweiten umlaufenden Rille (12) geöffnet sind; und
und eine Vielzahl von Blöcken (41) auf einem Laufflächenabschnitt, die durch die erste umlaufende Rille (11), die zweite umlaufende Rille (12) und die Vielzahl von lateralen Rillen (14) unterteilt sind,
einen Luftstrom in einer Richtung, die einer Reifendrehrichtung entgegengesetzt ist, der während des Laufens eines Fahrzeugs in der ersten umlaufenden Rille (11) und der zweiten umlaufenden Rille (12) erzeugt wird; wobei
jeder Block (41) der Vielzahl von Blöcken (41) Folgendes aufweist:
eine erste Wandfläche (42), die aus einer Position gebildet ist, an der die laterale Rille (14) auf einer Abwärtsstromseite (H) des Luftstroms zu der ersten umlaufenden Rille (11), zu einer Aufwärtsstromseite (G) des Luftstroms hin, geöffnet ist;
eine zweite Wandfläche (43), die aus einer Position gebildet ist, an der die laterale Rille (14) auf der Abwärtsstromseite (H) des Luftstroms zu der zweiten umlaufenden Rille (12), zu der Aufwärtsstromseite (G) des Luftstroms hin, geöffnet ist; und
einen Blockeckabschnitt (44), der an einer Position gebildet ist, an der die laterale Rille (14) auf der Aufwärtsstromseite (G) des Luftstroms zu der ersten umlaufenden Rille (11) geöffnet ist; und
wenn die zwei Blöcke (41) auf der Aufwärtsstromseite (G) und der Abwärtsstromseite (H) des Luftstroms daneben in der Reifenumfangsrichtung (S) betrachtet werden, eine virtuelle Fläche (46), die auf der Abwärtsstromseite (H) des Luftstroms durch Erweitern der ersten Wandfläche (42) des Blocks (41) auf der Aufwärtsstromseite (G) erhalten wird, durch eine Position in der ersten umlaufenden Rille (11) auf der Schulterabschnittsseite des Blockeckabschnitts (44) des Blocks (41) auf der Abwärtsstromseite (H) hindurchgeht und den Block (41) auf der Abwärtsstromseite (H) in der ersten umlaufenden Rille (11) schneidet; und
eine Rillenbreite (W) der zweiten umlaufenden Rille (12) zu der Abwärtsstromseite (H) des Luftstroms hin an der zweiten Wandfläche (43) des Blocks (41) allmählich größer wird.

2. Reifen (1) gemäß Anspruch 1, wobei,
wenn die zwei Blöcke (41) auf der Aufwärtsstromseite (G) und der Abwärtsstromseite (H) des Luftstroms daneben in der Reifenumfangsrichtung (S) betrachtet werden, eine virtuelle Fläche (47), die auf der Abwärtsstromseite (H) des Luftstroms durch Erweitern der zweiten Wandfläche (43) des Blocks auf der Aufwärtsstromseite (G) erhalten wird, zu einer Innenseite der lateralen Rille (14) hin zwischen den zwei Blöcken (41) erweitert wird.

3. Reifen (1) gemäß Anspruch 1 oder 2, wobei
die zweite Wandfläche (43) des Blocks (41) zu der Schulterabschnittsseite (4) in Bezug auf die Reifenumfangsrichtung (S) zu der Abwärtsstromseite (H) des Luftstroms hin geneigt ist.

4. Reifen (1) gemäß einem der Ansprüche 1 bis 3, wobei
die zweite Wandfläche (43) des Blocks (41) eine gekrümmte Fläche ist, die zu der Innenseite der lateralen Rille (14) auf der Abwärtsstromseite (H) des Luftstroms hin gekrümmt ist.

5. Reifen (1) gemäß einem der Ansprüche 1 bis 3,
wobei die zweite Wandfläche (43) des Blocks (41) eine Ebene ist, die zu der Schulterabschnittsseite (4) in Bezug auf die Reifenumfangsrichtung (S) zu der Abwärtsstromseite (H) des Luftstroms hin geneigt ist.

6. Reifen (1) gemäß einem der Ansprüche 1 bis 5, der Folgendes beinhaltet:
eine Stollenrille (13), die auf einer Schulterabschnittsseite der ersten umlaufenden Rille (11) gebildet ist und zu der ersten umlaufenden Rille (11) geöffnet ist; und
einen erhobenen Abschnitt (15), der aus einem Rillenboden der Stollenrille (13) erhoben ist und Rillenwände auf beiden Seiten der Stollenrille (13) verbindet.

7. Reifen (1) gemäß einem der Ansprüche 1 bis 6, wobei
die Rillenbreite der zweiten umlaufenden Rille (12) breiter als eine Rillenbreite der lateralen Rille (14) ist; und
die Rillenbreite der lateralen Rille (14) breiter als eine Rillenbreite der ersten umlaufenden Rille (11) ist.

8. Reifen (1) gemäß einem der Ansprüche 1 bis 7, wobei die erste umlaufende Rille (11) gebogen ist.

## Revendications

1. Pneu (1) comprenant:
une première cannelure circonférentielle (11) agencée entre une partie centrale de bande de roulement (3) et une partie d'épaulement (4) ;
une seconde cannelure circonférentielle (12) agencée sur un côté de partie centrale de bande de roulement de la première cannelure circonférentielle (11) ;
une pluralité de cannelures latérales (14) ouvertes sur la première cannelure circonférentielle (11) et la seconde cannelure circonférentielle (12) ; et
une pluralité de blocs (41) sur une partie de bande de roulement séparée par la première cannelure circonférentielle (11), la seconde cannelure circonférentielle (12) et la pluralité de cannelures latérales (14),
un flux d'air dans une direction opposée à une direction de rotation du pneu généré dans la première cannelure circonférentielle (11) et la seconde cannelure circonférentielle (12) pendant la conduite d'un véhicule ; dans lequel
chaque bloc (41) de la pluralité de blocs (41) présente :
une première surface murale (42) formée à partir d'une position où la cannelure latérale (14) sur un côté en aval (H) du flux d'air est ouverte à la première cannelure circonférentielle (11), vers un côté en amont (G) du flux d'air ;
une seconde surface murale (43) formée à partir d'une position où la cannelure latérale (14) sur le côté en aval (H) du flux d'air est ouverte à la seconde cannelure circonférentielle (12), vers le côté en amont (G) du flux d'air ; et
une partie d'angle de bloc (44) formée à une position où la cannelure latérale (14) sur le côté en amont (G) du flux d'air est ouverte à la première cannelure circonférentielle (11) ; et
lorsque les deux blocs (41) sur le côté en amont (G) et le côté en aval (H) du flux d'air adjacents dans la direction circonférentielle du pneu (S) sont visualisés, une surface virtuelle (46) obtenue en étendant, sur le côté en aval (H) du flux d'air, la première surface murale (42) du bloc (41) sur un côté en amont (G) passe à travers une position dans la première cannelure circonférentielle (11) sur le côté de partie d'épaulement de la partie d'angle de bloc (44) du bloc (41) sur le côté en aval (H) et coupe avec le bloc (41) sur le côté en aval (H) dans la première cannelure circonférentielle (11) ; et
une largeur de cannelure (W) de la seconde cannelure circonférentielle (12) augmente progressivement vers le côté en aval (H) du flux d'air à la seconde surface murale (43) du bloc (41).

2. Pneu (1) selon la revendication 1, dans lequel
lorsque les deux blocs (41) sur le côté en amont (G) et le côté en aval (H) du flux d'air adjacent dans la direction circonférentielle du pneu (S) sont visualisés, une surface virtuelle (47) obtenue en étendant, sur le côté en aval (H) du flux d'air, la seconde surface murale (43) du bloc sur le côté en amont (G) est étendue vers un intérieur de la cannelure latérale (14) entre les deux blocs (41).

3. Pneu (1) selon la revendication 1 ou 2, dans lequel
la seconde surface murale (43) du bloc (41) est inclinée vers le côté de la partie d'épaulement (4) relativement à la direction circonférentielle de pneu (S) vers le côté en aval (H) du flux d'air.

4. Pneu (1) selon l'une quelconque des revendications 1 à 3, dans lequel
la seconde surface murale (43) du bloc (41) est une surface incurvée vers l'intérieur de la cannelure latérale (14) sur le côté en aval (H) du flux d'air.

5. Pneu (1) selon l'une quelconque des revendications 1 à 3, dans lequel
la seconde surface murale (43) du bloc (41) est un plan incliné vers le côté de la partie d'épaulement (4) relativement à la direction circonférentielle du pneu (S) vers le côté en aval (H) du flux d'air.

6. Pneu (1) selon l'une quelconque des revendications 1 à 5, comprenant en outre :
une gorge médiane (13) formée sur un côté de partie d'épaulement de la première cannelure circonférentielle (11) et ouverte à la première cannelure circonférentielle (11) ; et
une partie surélevée (15) surélevée par rapport à un fond de cannelure de la gorge médiane (13) et reliant des parois de cannelure sur les deux côtés de la gorge médiane (13).

7. Pneu (1) selon l'une quelconque des revendications 1 à 6, dans lequel
la largeur de la cannelure de la seconde cannelure circonférentielle (12) est supérieure à une largeur de cannelure de la cannelure latérale (14) ; et
la largeur de cannelure de la cannelure latérale (14) est supérieure à une largeur de cannelure de la première cannelure circonférentielle (11).

8. Pneu (1) selon l'une quelconque des revendications 1 à 7, dans lequel la première cannelure circonférentielle (11) est pliée.
